# EUROPÄISCHE PATENTSCHRIFT

(11) **EP 1 994 099 B1**
(45) Veröffentlichungstag und Bekanntmachung des Hinweises auf die Patenterteilung: **19.10.2011**
(21) Anmeldenummer: 07723097.7
(22) Anmeldetag: 08.03.2007
(51) Int. Cl.: C09D 5/00, C09D 7/00

(54) **KRISTALLINEN ABLAGERUNGEN ENTGEGENWIRKENDE SCHICHT ODER BESCHICHTUNG**
COAT OR COATING TO COUNTERACT CRYSTALLINE DEPOSITS
COUCHE OU REVÊTEMENT AGISSANT CONTRE DES DÉPÔTS CRISTALLINS

(30) Priorität: 10.03.2006 DE 102006012906
(43) Veröffentlichungstag der Anmeldung: 26.11.2008
(60) Teilanmeldung: 11150693.7
(73) Patentinhaber: ItN Nanovation AG, 66117 Saarbrücken (DE); BASF SE, 67056 Ludwigshafen (DE)
(72) Erfinder: FABER, Stefan, 66133 Saarbrücken (DE); SCHILLO, Bernhard, 66538 Neunkirchen (DE); BINKLE, Olaf, 66459 Kirkel (DE); NONNINGER, Ralph, 66129 Saarbrücken (DE)
(74) Vertreter: Patentanwälte Ruff, Wilhelm, Beier, Dauster & Partner
(86) Internationale Anmeldenummer: PCT/EP2007/002002
(87) Internationale Veröffentlichungsnummer: WO 2007/104467

(56) Entgegenhaltungen:
- WO-A-99/15595

## Beschreibung

Die vorliegende Erfindung betrifft eine kristallinen Ablagerungen entgegenwirkende Schicht oder Beschichtung auf einem Substrat, eine Zusammensetzung zur Herstellung einer solchen Schicht oder Beschichtung, die Verwendung einer solchen Zusammensetzung als Beschichtungsmaterial und Gegenstände, die eine solche Schicht oder Beschichtung aufweisen.

Als Kristallisation bezeichnet man bekanntlich den Vorgang der Bildung von Kristallen. Das kann aus einer Lösung, einer Schmelze, der Gasphase, einem amorphen Festkörper oder auch aus einem anderen Kristall (Umkristallisation), aber immer durch Kristallbildung und Kristallwachstum, erfolgen. Ein Kristall ist ein anisotroper, homogener Körper, der aus einer dreidimensional und periodisch angeordneten Struktureinheit besteht. Damit sich ein Kristall bilden kann, muß der auszukristallisierende Stoff zunächst in Übersättigung gebracht werden. Dabei ordnen sich die zuvor gelösten Moleküle bzw. Elemente in einer regelmäßigen, teils stoffspezifischen Form an.

Stark anhaftende Verkrustungen auf Substraten infolge der Auskristallisation von Salzen aus wässriger Lösung sind lange bekannt und führen in vielen Bereichen zu massiven Problemen. Bekannte Beispiele dafür sind die Verkalkungen von Wasserkesseln und Boilern aufgrund des temperaturabhängigen Calciumhydrogencarbonat/Calciumcarbonat - Gleichgewichtes, die dazu führen, dass diese regelmäßig gereinigt werden müssen, um ihre Funktion zu gewährleisten. Dabei kommen in der Regel chemische (z. B. Säuren) oder mechanische Verfahren zum Einsatz. Eine Kristallisationsprophylaxe durch die Verwendung von destilliertem Wasser oder Zusatz von Komplexbildnern wie EDTA oder auch lonentauschern ist nur bei kleinen geschlossenen Gefäßen möglich, aber zum Beispiel in großflächigen offenen bzw. durchflossenen Systemen mit hoher Salzkonzentration nicht durchführbar.

Auch in anderen industriellen Bereichen sind solche (u. a. auch als Kristallisationsfouling bekannte) Phänomene häufig anzutreffen. So bilden sich z. B. in Verdampferanlagen zur Meerwasserentsalzung, Wärmetauschern in Industrieanlagen oder Kühlwasserdurchflussanlagen auf Oberflächen, die mit salzhaltigen Lösungen in Kontakt stehen, mit der Zeit fest anhaftende Salzkrusten, die schwer zu entfernen sind und zudem auch im Falle metallischer Oberflächen deren Korrosion fördern können. Durch Salzkrusten auf Thermostaten, Heizstäben oder Durchlauferhitzern wird zudem der Wärmeübergang stark behindert:

In Kraftwerken oder Müllverbrennungsanlagen werden Substanzen bzw. Reaktionsprodukte aus der Rauchgasentschwefelungsanlage vom Rauchgas als feine Flüssigkeitströpfchen mitgeschleppt. Beim Durchgang des Aerosols durch den Dampfgasvorwärmer (DaGaVo) werden infolge der Verdampfung von Flüssigkeit Salze (meist Sulfate) auf den Wärmeaustauschrohren abgeschieden. Diese Abscheidungen können mit der Zeit zur Verstopfung der Anlage führen und dadurch deren Abschaltung erforderlich machen. Die Rohre müssen daher in regelmäßigen Abständen aufwendig gereinigt werden, was den Betrieb der Anlage natürlich beeinträchtigt und mit hohem Aufwand und Kosten verbunden ist.

Aus dem Stand der Technik sind Beschichtungen bekannt, die die Fleekenbildung aufgrund des Eintrocknens von Regenwasser auf Oberflächen vermindern. So offenbaren die US 6,013,724 und die JP 10130581 silanbasierte Beschichtungen, die eine Verschmutzung durch eingetrocknetes Regenwasser verhindern sollen. Solche Schichten sind jedoch wenig abrasions- und langzeitstabil. Sie eignen sich daher nicht für den Einsatz in Dampfgasvorwärmern oder Salzwasserverdampferanlagen.

So genannte "Easy To Clean" Beschichtungen auf Fluorsilan-Basis wie in der DE 195 44 763 A1 oder der EP 587 667 B1 beschrieben, sind zwar prinzipiell in der Lage Wasser abperlen zu lassen, können jedoch zur Verhinderung von Ablagerungen durch Salzkristallisation auf Oberflächen nicht verwendet werden. Zum einen ist die typische Schichtdicke mit 5-10 um deutlich zu niedrig, um unter den meist abrasiven Bedingungen einer Kristallisation aus fließenden, salzhaltigen Lösungen Bestand zu haben. Zum anderen quellen diese Schichten in wäßriger Lösung mit der Zeit auf, wodurch sie ihren .Effekt verlieren. Weiterhin sind die den Effekt verursachenden Fluor-Gruppen nur an der Oberfläche der Schicht lokalisiert, was bedeutet, daß nach dem Abtrag der obersten Schicht keine Wasserabweisung mehr erfolgen kann. Ein teure Teflonisierung von Metallflächen mit einer PTFE-Schicht ist ebenfalls nicht geeignet, einen langanhaltenden Antikristallisationseffekt zu bewirken.

Aus der WO 99/15595 sind panzerartige Beschichtungen bekannt, mit denen sich z.B. Unterseekabel vor Haibissen schützen lassen. Diese Beschichtungen enthalten Hartstoff wie z.B. Partikel aus kubischem Bornitrid.

Die Aufgabe der vorliegenden Erfindung besteht entsprechend in der Bereitstellung einer technischen Lösung, die die aus dem Stand der Technik bekannten Nachteile nicht aufweist Diese Lösung soll es ermöglichen, Abscheidungen kristalliner Art, insbesondere von Salzen, auf Oberflächen zu verhindern oder zumindest stark zu erschweren. Der Fokus soll dabei insbesondere auf dem Schutz von feuchten oder permanent in Wasser eingetauchten Oberflächen liegen.

Diese Aufgabe wird durch die Schicht oder Beschichtung mit den Merkmalen des Anspruchs 1 sowie die Verwendung mit den Merkmalen des Anspruchs 12 gelöst. Bevorzugte Ausführungsformen der erfindungsgemäßen Schicht oder Beschichtung sind in den abhängigen Ansprüchen 2 bis 8 beschrieben. Eine Zusammensetzung zur Herstellung einer solchen Schicht oder Beschichtung ist in den Ansprüchen 9-11 definiert, eine technische Anlage mit Komponenten, die mit einer solchen Schicht mindestens teilweise beschichtet sind, in Anspruch 13

Eine erfindungsgemäße Schicht oder Beschichtung umfaßt eine Matrix aus einem Bindersystem und keramischen Partikeln sowie hexagonales Bornitrid in Partikelform.

Überraschenderweise wurde gefunden, daß eine derartige Schicht oder Beschichtung kristalline Ablagerungen schon bei Raumtemperatur vermeidet oder diesen zumindest entgegenwirkt. Sie ist insbesondere geeignet für Substrate mit Oberflächen aus Metall, Glas, Keramik, Email oder auch Kunststoff. Sie zeichnet sich dabei durch eine gute Haftung zur Oberfläche und hohe Abrasionsstabilität aus. Ihre Funktionalität ist bereits bei Raumtemperatur gewährleistet, und sie weist eine lange Lebensdauer auf.

Die Bornitrid-Partikel sind in die Matrix eingelagert und im wesentlichen gleichmäßig in dieser verteilt. Dadurch bleibt die erfindungsgemäße Schicht im Gegensatz zu einer "Easy To Clean"-Oberfläche auch funktionsfähig, wenn die Oberfläche der Schicht im Laufe der Zeit teilweise abgetragen werden sollte.

Die hohe Abrasionsstabilität der erfindungsgemäßen Schicht oder Beschichtung wird primär durch die Matrix aus dem Bindersystem und den keramischen Partikeln gewährleistet. Unter keramischen Partikeln sollen vorliegend im weitesten Sinn aus anorganischen Verbindungen aufgebaute Partikel verstanden werden, die vorzugsweise mindestens teilweise kristallin vorliegen.

Das Bindersystem einer erfindungsgemäßen Schicht oder Beschichtung weist mindestens ein (gehärtetes bzw. ausgehärtetes) organisches Bindemittel auf. Das mindestens eine organische Bindemittel kann beispielsweise in Form von wäßrigen Emulsionen bzw. Dispersionen eingesetzt werden und trägt zur Verfestigung und Verdichtung der herzustellenden Schicht oder Beschichtung bei.

In einer bevorzugten Ausführungsform umfaßt das mindestens eine organische Bindemittel einen Binder auf Acrylbasis.

Das mindestens eine organische Bindemittel umfasst mindestens einen siliziumorganischen Bestandteil. Dieser umfaßt insbesondere mindestens ein Mitglied aus der Gruppe der Polydimethylsiloxane mit bevorzugt Alkylpolysiloxan, Alkylsiliconharz und Phenylsiliconharz.

Darüber hinaus ist es bevorzugt, wenn das mindestens eine organische Bindemittel mindestens ein Siliconpolyesterharz umfasst.

In einer besonders bevorzugten Ausführungsform wird für eine erfindungsgemäße Schicht oder Beschichtung ein Bindersystem gewählt, das unterhalb von 250 °C, vorzugsweise unterhalb von 150 °C, insbesondere bei Raumtemperatur, härtbar ist. Dies hat den Vorteil, daß bei der Herstellung der Schicht oder Beschichtung kein gesonderter Härtungsschritt bei sehr hohen Temperaturen erforderlich ist, so daß für die Härtung keine Anwendung hoher Temperaturen nötig ist und die Schicht auch auf temperaturinstabilen Substraten, z. B. auf Kunststoffsubstraten, Anwendung finden kann. Auch eine Nachrüstung bereits bestehender Anlagen läßt sich so leichter realisieren.

In einer weiteren bevorzugten Ausführungsform kann es aber auch bevorzugt sein, daß das Bindersystem neben dem organischem Bindemittel mindestens ein anorganisches Bindemittel aufweist.

Ein solches Bindersystem ist insbesondere dann bevorzugt, wenn es anorganische Nanopartikel, insbesondere solche mit einer mittleren Teilchengröße < 100 nm, umfaßt. Besonders bevorzugt weisen die Nanopartikel eine mittlere Teilchengröße von unter 50 nm, insbesondere unter 25 nm, auf.

Bei den Nanopartikeln handelt es sich insbesondere um oxidische Partikel, insbesondere um mindestens ein Mitglied aus der Gruppe mit Aluminiumoxid-, Zirkonoxid-, Böhmit- und Titandioxid-Partikeln.

Im Gegensatz zu organischen Bindersystemen erfordern Bindersysteme mit rein anorganischen Bindemitteln in der Regel eine Härtung bzw. Verdichtung bei vergleichsweise deutlich höheren Temperaturen (Sintertemperaturen). Dies schränkt ihren Anwendungsbereich insofern ein, als sie sich nicht für Beschichtungen auf weniger temperaturstabilen Substraten, beispielsweise solchen aus Kunststoff, eignen. Auf der anderen Seite ist eine erfindungsgemäße Schicht oder Beschichtung mit rein anorganischem Bindersystem außerordentlich hochtemperaturstabil, so daß sie sich insbesondere zur Beschichtung von Substraten eignet, an die entsprechende Anforderungen gestellt werden.

Besonders bevorzugt ist eine erfindungsgemäße Schicht oder Beschichtung auch dann, wenn sie ein Bindersystem aufweist, das eine Kombination aus mindestens einem organischen und mindestens einem anorganischen Bindemittel umfaßt. Ein solches "Hybrid-Bindersystem" erfordert in der Regel zum Erreichen einer Ausgangsfestigkeit einen Härtungsschritt bei den Temperaturen, die zur Härtung des organischen Bindersystems nötig sind, also beispielsweise bei Raumtemperatur.

Die keramischen Partikel bzw. Teilchen der Matrix einer erfindungsgemäßen Schicht oder Beschichtung weisen vorzugsweise eine mittlere Teilchengröße zwischen 0,2 µm und 5 µm auf.

Vorzugsweise handelt es sich bei den keramischen Teilchen um oxidische Teilchen, insbesondere um Aluminiumoxid- und/oder Titandioxid-Teilchen.

In einer weiteren bevorzugten Ausführungsform handelt es sich bei den keramischen Teilchen/Partikeln um Alumosilicat- bzw. Aluminosilicat-Teilchen. Hierunter sind insbesondere die Feldspate und Zeolithe hervorzuheben. Auch das Kaolin ist als bevorzugt zu nennen, wobei es sich hier bekanntlich um ein Gesteinsmaterial handelt, das als Hauptbestandteil Kaolinit, ein Verwitterungsprodukt des Feldspats, enthält.

Auch für die Bornitrid-Partikel in einer erfindungsgemäßen Schicht oder Beschichtung ist eine bestimmte mittlere Teilchengröße bevorzugt. Diese liegt insbesondere zwischen 0,2 µm und 5 µm.

Bevorzugt weist eine erfindungsgemäße Schicht oder Beschichtung eine Dicke im Bereich zwischen 10 um und 150 um, vorzugsweise von ca. 50 um, auf. Eine Dicke in diesem Bereich gewährleistet selbst bei hohen mechanischen Anforderungen an die Schicht oder Beschichtung eine lange Lebensdauer.

Eine erfindungsgemäße Schicht oder Beschichtung wirkt der Anhaftung von Salzen aller Art entgegen, so z. B. von Kochsalz, Meersalz, Halogeniden, insbesondere Chloriden, Bromiden, Fluoriden, Sulfaten, Phosphaten, Carbonaten, Hydrogencarbonaten, Hydrogenphosphaten, vorzugsweise von CaSO₄ und Kalk. Sie eignet sich besonders für feuchte oder permanent in Wasser eingetauchte oder von Wasser überströmte Oberflächen. Je nach verwendetem Bindersystem läßt sich diese Schicht oder Beschichtung bei Raumtemperatur oder vergleichsweise niedrigen Temperaturen aushärten bzw. verfestigen. Dies gilt insbesondere für Beschichtungen mit organischen Bindersystemen oder den erwähnten "Hybrid-Bindersystemen" mit einer Kombination aus mindestens einem organischen und mindestens einem anorganischen Bindemittel. Sofern sich auf einer erfindungsgemäßen Schicht oder Beschichtung kristalline Ablagerungen bilden, sind diese vergleichsweise leicht zu entfernen.

Selbst aus Lösungen mit hohen Salzkonzentrationen, wie sie z. B. in Verdampferanlagen zur Meerwasserentsalzung oder Durchflußanlagen mit Kühlwasser aus Flüssen oder Seen auftreten, bilden sich mit der erfindungsgemäßen Beschichtung keine fest anhaftenden Salzkrusten auf den mit einer erfindungsgemäßen Schicht oder Beschichtung versehenen Oberflächen.

Darüber hinaus wirkt eine erfindungsgemäße Schicht oder Beschichtung auch der Ablagerung von Salzen in Verbindung mit Aschen entgegen, was beispielsweise in Dampfgasvorwärmern zu Problemen führen kann, wie eingangs bereits erwähnt wurde. Eine erfindungsgemäße Schicht oder Beschichtung kann daher auch im DaGaVo-Kraftwerksbereich eingesetzt werden. Die Anbackungsneigung auf den Wärmeaustauscherrohren wird dadurch verringert, was die Laufzeit der Anlage verlängert bzw. die Reinigung der Rohre erleichtert.

Ebenfalls Gegenstand der vorliegenden Erfindung ist eine Zusammensetzung zur Herstellung einer kristallinen Abscheidungen entgegenwirkenden Schicht oder Beschichtung.

Eine erfindungsgemäße Zusammensetzung umfaßt
- ein Bindersystem, mit mindestens einem siliziumorganischen Bestandteil als organisches Bindemittel
- keramische Partikel,
- hexagnales Bornitrid in Partikelform,
- ggf. Prozessadditive sowie
- mindestens ein Lösungsmittel.

Wie bereits erwähnt, kann das Bindersystem einer erfindungsgemäßen Zusammensetzung neben einem organischen auch ein anorganisches Bindersystem umfassen. Alle diese Systeme wurden im Rahmen der Beschreibung einer erfindungsgemäßen Schicht oder Beschichtung bereits näher definiert. Auf die entsprechenden Beschreibungsteile wird zur Vermeidung von Wiederholungen verwiesen und hiermit ausdrücklich Bezug genommen.

Gleiches gilt auch für die bevorzugten keramischen Partikel sowie die in einer erfindungsgemäßen Zusammensetzung bevorzugt enthaltenen Bornitrid-Partikel, die ebenfalls bereits oben beschrieben wurden.

Bei dem mindestens einen Lösungsmittel in einer erfindungsgemäßen Zusammensetzung handelt es sich vorzugsweise um ein polares Lösungsmittel, insbesondere um Wasser. Grundsätzlich können aber, alternativ oder zusätzlich, auch weitere polare Komponenten wie beispielsweise Alkohole enthalten sein.

In vielen Fällen ist es jedoch wünschenswert, auf organische Bestandteile im Lösungsmittel weitestgehend zu verzichten. So besteht bei Anwesenheit organischer Lösungsmittel aufgrund ihres niedrigen Dampfdruckes grundsätzlich immer die Gefahr eines Brandes.

Entsprechend weist die erfindungsgemäße Zusammensetzung in einer bevorzugten Ausführungsform ein Lösungsmittel auf, das frei von nichtwäßrigen flüssigen Bestandteilen ist.

Als Prozessadditive können grundsätzlich alle dem Fachmann bekannten Additive in einer erfindungsgemäßen Zusammensetzung enthalten sein, so z. B. Dispergiermittel, Entschäumer, Verlaufsmittel, Cobindemittel oder Verdicker zur Viskositätseinstellung.

Vorzugsweise weist eine erfindungsgemäße Zusammensetzung einen Feststoffgehalt zwischen 30 Gew.-% und 50 Gew.-%, insbesondere von ca. 40 Gew.-%, auf. Die Menge des in einer erfindungsgemäßen Zusammensetzung enthaltenen Suspensionsmittels ist grundsätzlich nicht kritisch und kann je nach Verwendung der Zusammensetzung variiert werden. In einer bevorzugten Ausführungsform liegt die Zusammensetzung in Form einer niedrigviskosen, insbesondere streichbaren oder sprühbaren Suspension vor.

Eine erfindungsgemäße Zusammensetzung weist Bornitrid, bezogen auf den Feststoffgehalt, bevorzugt in einem Anteil von 5 Gew.-% bis 50 Gew.-%, insbesondere von ca. 10 Gew.-% bis ca. 15 Gew.-%, auf.

Die keramischen Partikel sind in einer erfindungsgemäßen Zusammensetzung, bezogen auf den Feststoffgehalt, insbesondere in einem Anteil von 5 Gew.-% bis 50 Gew.-%, insbesondere von ca. 10 Gew.-% bis ca. 20 Gew.-%, enthalten.

Eine erfindungsgemäße Zusammensetzung zeichnet sich durch einfache Applizierbarkeit aus. Sie kann auf ein Substrat gesprüht, gestrichen oder durch Tauchen oder Fluten aufgebracht werden. Abhängig vom eingesetzten Bindersystem muß sie nach dem Auftrag lediglich noch getrocknet, gegebenenfalls bei erhöhter Temperatur noch nachgehärtet werden. Installierte Systeme und Anlagen lassen sich so problemlos mit einer kristallinen Ablagerungen entgegenwirkenden Schicht nachrüsten.

Auch die Verwendung der beschriebenen bornitridhaltigen Zusammensetzung als Material zur Beschichtung von mit salzhaltigen Medien und Lösungen oder Tropfen bzw. Tröpfchen in Kontakt tretenden Oberflächen ist Gegenstand der vorliegenden Erfindung.

Geeignet ist die bornitridhaltige Zusammensetzung zur Verwendung auf Oberflächen aus Glas, Keramik, Email, Metall und Kunststoff. Entsprechend eignet sie sich zur Beschichtung von Wärmeaustauscheranlagen, Wasserleitungen, Teilen von Trinkwasseraufbereitungsanlagen, Verdampferanlagen zur Meerwasserentsalzung, Kühlwasserkreisläufen, Kühlrohren mit Flusswasser für Kraftwerke, Prozeß- und Brauchwasseranlagen, beregnete Flächen, Komponenten von Dampfgasvorwärmern etc..

Auch zur Beschichtung von Armaturen, Thermostaten, Heizspiralen, Durchlauferhitzern, Wasserkesseln und ähnlichem zum Schutz vor Kalkablagerungen läßt sich eine bornitridhaltige Zusammensetzung verwenden.

Weiterhin umfaßt die Erfindung auch jeden Gegenstand, der mit einer erfindungsgemäßen Schicht oder Beschichtung, versehen, insbesondere beschichtet, ist. Dabei ist es unerheblich, ob der Gegenstand nur teilweise oder aber vollständig mit der erfindungsgemäßen Schicht oder Beschichtung beschichtet ist.

Insbesondere ist auch eine Wasseraufbereitungsanlage, Meerwasserentsalzungsanlage oder dergleichen, die mit salzhaltigem Wasser in Kontakt tretende Komponenten aufweist, die mindestens teilweise mit einer hexagonales Bornitrid enthaltenden Schicht versenen sind, Gegenstand der vorliegenden Erfindung.

Die Herstellung einer Schicht oder Beschichtung auf einem Substrat erfolgt durch Auftrag einer bornitridhaltigen Zusammensetzung auf das Substrat und anschließende Härtung.

Das Härten erfolgt bevorzugt bei vergleichsweise niedrigen Temperaturen, vorzugsweise bei Temperaturen < 250 °C, insbesondere bei Raumtemperatur.

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebenen besonderen Ausführungsformen dienen lediglich zur Erläuterung und zum besseren Verständnis der Erfindung und sind in keiner Weise einschränkend zu verstehen.

### Beispiel 1

Eine bevorzugte Ausführungsform einer erfindungsgemäßen Zusammensetzung weist neben Wasser als Lösungsmittel die folgenden Komponenten auf:
- 37,5 g Joncryl® 8383 (Fa. Johnson Polymer)
- 37,5 g Joncryl® 8300 (Fa. Johnson Polymer)
- 150 g Titandioxid-Suspension (Fa. Kronos)
- 150 g Bornitrid-Suspension (Fa. Saint-Gobain)
- 42 g Siliziumbinder
- 2,085 g Tego® Protect 5100 (Fa. Tego Chemie)
- 4,17 g Tego® ViscoPlus 3000 (Fa. Tego Chemie)

Die Titandioxid-Suspension umfaßt dabei die folgenden Komponenten:
- 100 g Wasser demineralisiert (demin.)
- 2,448 g EFKA® 4530 (Fa. Efka Additives)
- 68 g TiO₂ (Fa. Kronos)
- 0,068 g Surtynol® 104 BC (Fa. Air Products)

Zur Herstellung der Titandioxid-Suspension werden unter Rühren EFKA® 4530 und Wasser gemischt. Nach 30 Minuten wird das TiO₂ zugegeben. Danach wird Surfynol® 104 BC zugesetzt und weitere 2 Stunden gerührt. Anschließend wird die Mischung in einer Perlmühle gemahlen. Die Suspension ist lagerfähig und vor Gebrauch gut aufzurühren.

Die Bornitrid-Suspension umfaßt die folgenden Komponenten:
- 100 g Wasser demin.
- 11,1 g EFKA® 4530
- 74 g Bornitrid (Fa. Saint-Gobain)

Zur Herstellung der Bornitrid-Suspension werden unter Rühren EFKA® 4530 und Wasser gemischt. Nach 30 Minuten wird das Bornitrid zugegeben und 2 Stunden gerührt. Anschließend wird die Mischung unter Kühlung in einer Perlmühle gemahlen (Die Partikelgröße sollte in der fertigen Suspension unter 1 um liegen). Die Suspension ist lagerfähig und vor Gebrauch gut aufzurühren.

Die Siliziumbinder umfaßt die folgenden Komponenten:
- 2 g 3-Aminopropylmethyldiethoxysilan (Fa. Brenntag)
- 0,376 g Salzsäure (0,1 molar)
- 36,40 g Silres® MP 42 E (Fa. Wacker Chemie)
- 3,64 g Tego® Protect 5100
- 1,82 g Wasser demin.

Zur Herstellung des Siliziumbinders wird die Salzsäure zu 3-Aminopropylmethyldiethoxysilan wird getropft und 24 Stunden gerührt. Es entsteht ein Hydrolysat. Silres® MP 42, Tego® Protect 5100 und Wasser werden miteinander vermischt und mindestens 12 Stunden gerührt. Zu dieser Emulsion werden 1,82 g des Hydrolysats getropft und 24 Stunden gerührt.

Die Siliziumbindermischung ist nicht lagerfähig und ist direkt zu verarbeiten.

Zur Herstellung der endgültigen Zusammensetzung (siehe oben) werden unter Rühren Joncryl® 8383 und Joncryl® 8300 (Binder auf Acrylbasis) vermischt. Anschließend werden die Titandioxid-Suspension und die Bornitrid-Suspension zugegeben. Es wird vier Stunden gerührt. Danach wird der Siliziumbinder langsam zugetropft und 24 Stunden gerührt. Nach portionsweisem Zusatz von Tego® Protect 5100 wird 3 Stunden und nach Zugabe von Tego® ViscoPlus 3000 weitere 24 Stunden gerührt.

Der Auftrag der Zusammensetzung auf ein Substrat, z.B. Metallplatte, Edelstahlplatte, kann beispielsweise durch Sprühen, Tauchen, Fluten oder Aufpinseln erfolgen. Nach Trocknung bei Raumtemperatur ist die entstandene Schicht oder Beschichtung einsatzbereit.

Aufgrund der niedrigen Temperaturen bei der Härtung eignet sich eine solche Zusammensetzung besonders gut für temperaturinstabile Substrate, insbesondere solche aus Kunststoff.

Optional kann aber auch eine Nachhärtung bei höheren Temperaturen (< 200 °C) erfolgen.

### Beispiel 2

Eine weitere bevorzugte Ausführungsform einer erfindungsgemäßen Zusammensetzung weist neben Wasser als Lösungsmittel die folgenden Komponenten auf:

| Komponente Nr. | | Menge in Gew.-% |
|---|---|---|
| 1 | BN (Fa. Saint-Gobain) | 30,87 |
| 2 | Al₂O₃ (Fa. Alcoa) | 15,43 |
| 3 | Phosphatglas (Fa. Budenheim) | 12,00 |
| 4 | Polysiloxanbinder (Silres^{®} MP 42 E) | 30,00 |
| 5 | Phosphatischer Korrosionsschutz auf Basis von Zn-, Ca-, Al- phosphat in Phosphorsäure | 10,25 |
| 6 | Byk® 420/Butylglykol (Fa. Byk Chemie) | 1,15 |
| 7 | Acticide® MBS als Konservierungsmittel (Fa. Thor) | 0,3 |

Zur Herstellung dieser Zusammensetzung werden die Komponenten 1, 2, 3 und 5 zunächst jeweils separat mit Hilfe entsprechender Additive in Wasser dispergiert und mit Hilfe einer Perlmühle aufgemahlen. Danach werden die einzelnen Komponenten des Beschichtungssystems in obiger Reihenfolge vorgelegt und durch einfaches Rühren in Wasser miteinander vermischt. Der Feststoffanteil der Zusammensetzung wird dabei auf ca. 40 Gew.-% eingestellt.

Der Auftrag der Zusammensetzung auf ein entsprechendes Substrat kann beispielsweise durch Sprühen, Tauchen, Fluten oder Aufpinseln erfolgen. Nach Trocknung bei Raumtemperatur (oder auch bei höheren Temperaturen) erfolgt die eigentliche thermische Verfestigung der Beschichtung bei Temperaturen > 450 °C (über einen Zeitraum von 30 min).

### Beispiel 3

Eine weitere bevorzugte Ausführungsform einer erfindungsgemäßen Zusammensetzung weist neben Wasser als-Lösungsmittel die folgenden Komponenten auf:

| Komponente Nr. | | Menge in Gew% |
|---|---|---|
| 1 | Al₂O₃ (Fa. Alcoa) | 36,79 |
| 2 | n-ZrO₂ (Partikelgröße 10 nm) | 8,17 |
| 3 | BN (Fa. Saint-Gobain) | 20,68 |
| 4 | Byk® 420 / Butylglykol | 1,03 |
| 5 | Inodur^{®} (Fa. Inomat) | 33,0 |

Zur Herstellung dieser Zusammensetzung werden die Komponenten 1, 2 und 3 zunächst jeweils separat mit Hilfe entsprechender Additive in Wasser dispergiert und mit Hilfe einer Perlmühle aufgemahlen. Danach werden die Komponenten 1, 2 und 3 des Beschichtungssystems in obiger Reihenfolge vorgelegt und durch einfaches Rühren miteinander gemischt. Die Komponenten 4 und 5 werden ebenfalls miteinander gemischt und nach einer kurzen Aktivierungszeit (ca. 10 min) zu der Mischung aus den Komponenten 1, 2 und 3 gegeben. Der Feststoffanteil der Zusammensetzung wird dabei auf ca. 40 Gew.-% eingestellt.

Der Auftrag der Zusammensetzung auf ein entsprechendes Substrat kann beispielsweise durch Sprühen, Tauchen, Fluten oder Aufpinseln erfolgen. Nach Trocknen bei Raumtemperatur oder Temperaturen bis 150 °C erfolgt die eigentliche thermische Verfestigung der Beschichtung bei 450 - 500 °C (über einen Zeitraum von 10 min).

### Beispiel 4

Unter ausdrücklichem Verweis auf die Verfahrensführung der bisherigen Beispiele wird eine weitere bevorzugte Ausführungsform einer erfindungsgemäßen Zusammensetzung wie folgt hergestellt.

In einem Rührreaktor werden 41 g eines Siliconpolyesterharzes vorgelegt und mit 33 g Butylacetat verdünnt. Die so erhaltene. Mischung wird 30 Minuten bei Raumtemperatur gerührt. Anschließend werden 5,55 g pulverförmiges hexagonales Bornitrid zugegeben. Die auf diese Weise erhaltene Mischung wird dann 1 Stunde in einer Kugelmühle, die ZrO₂-Mahlperlen enthält, vermahlen und anschließend weiter mit 8,9 g eines perfluorierten Wachses vermengt. Danach wird mit Hilfe eines Dissolvers 8,9 g pulverförmiges kalziniertes Kaolin zugegeben, worauf eine weitere Stunde gerührt wird. Nach anschließender Zugabe eines Oberflächenadditivs (polyethermodifiziertes Polydimethylsiloxan, BYK-306) und einer weiteren Stunde Rühren kann die erhaltene Mischung in der bereits in den vorherigen Beispielen beschriebenen Weise auf ein Substrat (z.B. Metallplatte, Edelstahlplatte) aufgebracht werden. Dieses Aufbringen kann beispielsweise durch Versprühen mit einer Niederdruckpistole erfolgen.

### Beispiel 5

In einem Glasreaktor wurde jeweils ein mit einer Zusammensetzung gemäß den Beispielen 1, 2, 3 und 4 beschichtetes Edelstahlsubstrat sowie ein unbeschichtetes Edelstahlsubstrat als Referenz einer gesättigten CaSO₄-Lösung ausgesetzt. Die Substrate wurden von der CaSO₄-Lösung stetig überströmt (Die Strömung wurde durch einen Rührer erzeugt, die Strömungsgeschwindigkeit wurde dabei niedrig gewählt). Die Temperatur der CaSO₄-Lösung lag dabei bei 80 °C.

Nach 30 Tagen wurden die durch Kristallisation entstandenen CaSO₄-Ablagerungen auf den Substraten beurteilt. Die mit einer erfindungemäßen Zusammensetzung beschichteten Substrate waren ca. um den Faktor 4 geringer mit CaSO₄ bedeckt als die Referenz. Bereits visuell war eine deutlich geringere Bedeckung als bei dem unbeschichteten Vergleichssubstrat zu erkennen. Auf dem unbeschichteten Substrat war die CaSO₄-Schich deutlich dicker. Die Schicht auf den mit einer erfindungsgemäßen Zusammensetzung beschichteten Edelstahlsubstraten ließ sich mechanisch leicht abreinigen.

### Beispiel 6

Unterschiedliche konzentrierte Salzlösungen (CaCl₂/CaSO₄, Speisesalz, Speisesalz/CaCl₂) wurden auf mit Zusammensetzungen gemäß den Beispielen 1, 2, 3 und 4 beschichteten Stahloberflächen eingetrocknet (bei 150 °C über einen Zeitraum von 3 h). Danach wurden die Salzkrusten mit einem Spatel (also mechanisch) oder durch Spülen mit Wasser entfernt.

Im Vergleich zu einem unbeschichteten Substrat ließen sich die Krusten auf den beschichteten Substraten deutlich leichter entfernen. Die Beschichtung selbst blieb dabei ohne Veränderungen.

### Beispiel 7

Mit Zusammensetzungen gemäß den Beispielen 1, 2, 3 und 4 beschichtete, 10 x 10 cm große Substrate aus Normalstahl, Edelstahl, und Glas wurden im Trockenschrank auf 150 ° bzw. 170 °C erwärmt. Auf diese wurde jeweils mit einer Pipette ein ca. 2 - 3 ml großer Tropfen einer Salzlösung (Calciumchlorid, Calciumsulfat, jeweils 10 %ig in Wasser) gegeben und bei Raumtemperatur eingetrocknet. Dabei bildete sich eine tablettenförmige Salzkruste. Als Referenz wurde jeweils auch auf ein unbeschichtetes Substrat aus Normalstahl, Edelstahl und Glas ein Tropfen Salzlösung gegeben und eingetrocknet.

Bewertet wird das erkaltete Substrat. Es wird immer mit unbeschichteten Platten verglichen. Nach dem Erkalten haftete die Salzkruste sehr fest auf den unbeschichteten Referenzsubstraten und ließ sich nur schwer und auch nicht rückstandsfrei mit den Spatel entfernen.

Deutlich einfacher gestaltete sich das Ablösen der Kruste bei den beschichteten Oberflächen. Unter fließendem Wasser löst sich die Salztablette wesentlich früher und rückstandsfrei vom Untergrund (zum Großteil ohne sich aufzulösen).

## Patentansprüche

1. Kristallinen Ablagerungen entgegenwirkende Schicht oder Beschichtung auf einem Substrat, umfassend eine Matrix aus einem Bindersystem, das als organisches Bindemittel mindestens einen siliziumorganischen Bestandteil umfasst, und keramischen Partikeln, **dadurch gekennzeichnet, dass** in die Matrix Partikel aus hexagonalem Bornitrid eingelagert und im wesentlichen gleichmäßig in dieser verteilt sind.

2. Schicht oder Beschichtung nach Anspruch 1, **dadurch gekennzeichnet, dass** das mindestens eine organische Bindemittel mindestens ein Siliconpolyesterharz umfasst.

3. Schicht oder Beschichtung nach einem der vorhergehenden Ansprüche, **dadurch gekennzeichnet, daß** das Bindersystem unterhalb von 250 °C härtbar ist.

4. Schicht oder Beschichtung nach einem der vorhergehenden Ansprüche, **dadurch gekennzeichnet, daß** das Bindersystem mindestens ein anorganisches Bindemittel aufweist.

5. Schicht oder Beschichtung nach einem der vorhergehenden Ansprüche, **dadurch gekennzeichnet, daß** die keramischen Partikel der Matrix eine mittlere Partikelgröße zwischen 0,2 um und 5 um aufweisen.

6. Schicht oder Beschichtung nach einem der vorhergehenden Ansprüche, **dadurch gekennzeichnet, daß** es sich bei den keramischen Partikeln um oxidische Partikel handelt.

7. Schicht oder Beschichtung nach einem der vorhergehenden Ansprüche, **dadurch gekennzeichnet, dass** es sich bei den keramischen Partikeln um Alumosilikat-Partikel handelt.

8. Schicht oder Beschichtung nach einem der vorhergehenden Ansprüche, **dadurch gekennzeichnet, daß** die Bornitrid-Partikel eine mittlere Teilchengröße zwischen 0,2 µm und 5 µm aufweisen.

9. Zusammensetzung zur Herstellung einer kristallinen Ablagerungen entgegenwirkenden Schicht oder Beschichtung auf einem Substrat, welche eine Matrix aus einem Bindersystem, das als organisches Bindemittel mindestens einen siliziumorganischen Bestandteil umfasst, und keramischen Partikeln umfasst und sich **dadurch** auszeichnet, dass sie hexagonales Bornitrid in Partikelform aufweist, wobei die Bornitrid-Partikel in die Matrix eingelagert und im wesentlichen gleichmäßig in dieser verteilt sind, die Zusammensetzung umfassend
a. ein Bindersystem das als organisches Bindemittel mindestens einen siliziumorganischen Bestandteil umfasst,,
b. keramische Partikel,
c. hexagonales Bornitrid in Partikelform,
d. ggf. Prozeßadditive sowie
e. mindestens ein Lösungsmittel.

10. Zusammensetzung nach Anspruch 9, **dadurch gekennzeichnet, daß** es sich bei dem mindestens einen Lösungsmittel um ein polares Lösungsmittel handelt.

11. Zusammensetzung nach einem der Ansprüche 9 oder 10, **dadurch gekennzeichnet, daß** sie Bornitrid, bezogen auf den Feststoffgehalt, in einem Anteil von 5 Gew.-% bis 50 Gew.-% aufweist und/oder daß sie die keramischen Partikel, bezogen auf den Feststoffgehalt, in einem Anteil von 5 Gew.-% bis 50 Gew.-% aufweist.

12. Verwendung einer Zusammensetzung enthaltend hexagonales Bornitrid, keramische Partikel und ein Bindersystem, das als organisches Bindemittel mindestens einen siliziumorganischen Bestandteil umfasst, insbesondere nach einem der Ansprüche 9 bis 11, als Material zur Beschichtung von mit salzhaltigen Medien in Kontakt tretenden Oberflächen.

13. Wasseraufbereitungsanlage, Meerwasserentsalzungsanlage, Wärmeaustauscheranlage, insbesondere DaGaVo-Anlage, Kühlwasserkreislauf und dergleichen, **dadurch gekennzeichnet, daß** sie mit salzhaltigem Wasser in Kontakt tretende Komponenten aufweist, die mindestens teilweise mit einer hexagonales Bornitrid enthaltenden Schicht nach einem der Ansprüche 1 bis 8 versehen sind.

## Claims

1. A layer or coating which counteracts crystalline deposits on a substrate, comprising a matrix composed of a binder system comprising as organic binder at least one organosilicon constituent, and ceramic particles, **characterized in that** hexagonal boron nitride in particle form is incorporated into the matrix and distributed essentially homogeneously therein.

2. The layer or coating as claimed in claim 1, **characterized in that** the at least one organic binder comprises at least one silicone polyester resin.

3. The layer or coating as claimed in any of the preceding claims, **characterized in that** the binder system is curable below 250°C.

4. The layer or coating as claimed in any of the preceding claims, **characterized in that** the binder system comprises at least one inorganic binder.

5. The layer or coating as claimed in any of the preceding claims, **characterized in that** the ceramic particles of the matrix have a mean particle size between 0.2 µm and 5 um.

6. The layer or coating as claimed in any of the preceding claims, **characterized in that** the ceramic particles are oxidic particles.

7. The layer or coating as claimed in any of the preceding claims, **characterized in that** the ceramic particles are aluminosilicate particles.

8. The layer or coating as claimed in any of the preceding claims, **characterized in that** the boron nitride particles have a mean particle size between 0.2 µm and 5 um.

9. A composition for producing a layer or coating which counteracts crystalline deposits on a substrate, wherein the layer or coating is comprising a matrix composed of a binder system comprising as organic binder at least one organosilicon constituent, and ceramic particles, and wherein the layer or coating is **characterized in that** it includes hexagonal boron nitride in particle form, the boron nitride particles being incorporated into the matrix and distributed essentially homogeneously therein, wherein the composition is comprising
a. a binder system comprising as organic binder at least one organosilicon constituent,
b. ceramic particles,
c. hexagonal boron nitride in particle form,
d. optionally process additives, and
e. at least one solvent.

10. The composition as claimed in claim 9, **characterized in that** the at least one solvent is a polar solvent.

11. The composition as claimed in claim 9 or 10, **characterized in that** it comprises boron nitride, based on the solids content, in a proportion of from 5% by weight to 50% by weight, and/or it comprises ceramic particles, based on the solids content, in a proportion of from 5% by weight to 50% by weight.

12. The use of a composition, comprising hexagonal boron nitride, ceramic particles and a binder system comprising as organic binder at least one organosilicon constituent, especially as claimed in any one of claims 9 to 11, as a material for coating surfaces which come into contact with salt-containing media.

13. A water treatment plant, seawater desalinification plant, heat exchanger system, especially vapor gas preheater system, cooling water circuit or the like, **characterized in that** it has components which come into contact with salt-containing water which have been provided at least partly with a hexagonal boron nitride-containing layer as claimed in any one of claims 1 to 8.

## Revendications

1. Couche ou revêtement s'opposant aux dépôts cristallins sur un substrat, comprenant une matrice constituée par un système de liant qui comprend, comme liant organique, au moins un constituant organosilicié, et des particules céramiques, **caractérisé(e) en ce que** des particules de nitrure de bore hexagonal sont incorporées dans la matrice et réparties de manière essentiellement uniforme dans celle-ci.

2. Couche ou revêtement selon la revendication 1, **caractérisé(e) en ce que** ledit au moins un liant organique comprend au moins une résine de silicone-polyester.

3. Couche ou revêtement selon l'une quelconque des revendications précédentes, **caractérisé(e) en ce que** le système de liant est durcissable au-dessous de 250°C.

4. Couche ou revêtement selon l'une quelconque des revendications précédentes, **caractérisé(e) en ce que** le système de liant présente au moins un liant inorganique.

5. Couche ou revêtement selon l'une quelconque des revendications précédentes, **caractérisé(e) en ce que** les particules céramiques de la matrice présentent une grosseur moyenne des particules entre 0,2 µm et 5 µm.

6. Couche ou revêtement selon l'une quelconque des revendications précédentes, **caractérisé(e) en ce qu'**il s'agit, pour les particules céramiques, de particules d'oxyde.

7. Couche ou revêtement selon l'une quelconque des revendications précédentes, **caractérisé(e) en ce qu'**il s'agit, pour les particules céramiques, de particules d'aluminosilicate.

8. Couche ou revêtement selon l'une quelconque des revendications précédentes, **caractérisé(e) en ce que** les particules de nitrure de bore présentent une grosseur moyenne des particules entre 0,2 µm et 5 µm.

9. Composition pour la réalisation d'une couche ou d'un revêtement s'opposant aux dépôts cristallins sur un substrat, qui comprend une matrice constituée par un système de liant qui comprend, comme liant organique, au moins un constituant organosilicié, et des particules céramiques et qui est **caractérisée en ce qu'**elle présente du nitrure de bore hexagonal sous forme de particules, les particules de nitrure de bore étant incorporées dans la matrice et réparties de manière essentiellement uniforme dans celle-ci, la composition comprenant
a. un système de liant qui contient comme liant organique au moins un constituant organosilicié,
b. des particules céramiques,
c. du nitrure de bore hexagonal sous forme de particules,
d. le cas échéant des additifs de procédé ainsi que
e. au moins un solvant.

10. Composition selon la revendication 9, **caractérisée en ce qu'**il s'agit, pour ledit au moins un solvant, d'un solvant polaire.

11. Composition selon l'une quelconque des revendications 9 ou 10, **caractérisée en ce qu'**elle présente du nitrure de bore, par rapport à la teneur en solides, en une proportion de 5% en poids à 50% en poids et/ou **en ce qu'**elle présente des particules céramiques, par rapport à la teneur en solides, en une proportion de 5% en poids à 50% en poids.

12. Utilisation d'une composition contenant du nitrure de bore hexagonal, des particules céramiques et un système de liant, qui comprend, comme liant organique, au moins un constituant organosilicié, en particulier selon l'une quelconque des revendications 9 à 11, comme matériau pour le revêtement de surfaces entrant en contact avec des milieux contenant du sel.

13. Installation d'épuration des eaux, installation de dessalage de l'eau de mer, installation d'échange de chaleur et analogues, en particulier installation de réchauffage de vapeur et gaz DaGaVo, circuit d'eau de refroidissement, **caractérisé(e) en ce qu'**il/elle présente des composants entrant en contact avec de l'eau contenant du sel, qui sont pourvus, au moins partiellement, d'une couche contenant du nitrure de bore hexagonal selon l'une quelconque des revendications 1 à 8.
